# EUROPEAN PATENT APPLICATION

(11) **EP 4 393 302 A1**
(43) Date of publication of application: **03.07.2024**
(21) Application number: 22860682.8
(22) Date of filing: 04.07.2022
(51) Int. Cl.: A01K 27/00, A01K 1/035

(54) **LEASH FOR PETS WITH INCORPORATED BLANKET**

(30) Priority: 24.08.2021 ES 202131706 U
(71) Applicant: Parets Ferrer, Eric, 43816 Querol (Tarragona) (ES)
(72) Inventor: Parets Ferrer, Eric, 43816 Querol (Tarragona) (ES)
(74) Representative: Espiell Gomez, Ignacio
(86) International application number: PCT/ES2022/070425
(87) International publication number: WO 2023/025972

(57) **Abstract**

The invention relates to a leash for pets with an incorporated blanket, said leash comprising at least a filiform body (1a) with a fastening (1b) to the pet's collar at one end and gripping means (1c) at the opposite end for holding it, as well as an incorporated blanket (2) with coupling means (3, 4) that allow said blanket (2) to be carried in a stored position without affecting the normal use of the leash (1) and, when desired, allow the blanket to be extended for the pet to position itself on the same. The coupling means of the blanket (2) on the leash (1) are preferably made up of fasteners (3) that are especially designed to incorporate the rolled blanket (2) on a section of the filiform body (1a) of the leash (1), further ensuring that the blanket does not become unfurled when not in use.

## Description

### OBJECT OF THE INVENTION

The invention, as stated in the title of the present specification, relates to a leash for pets with incorporated blanket that contributes advantages and features to the function intended, which are described in detail further on.

The object of the present invention relates to a leash to be attached to a pet when taking said pet, usually dogs or cats, for a walk, said leash being distinguished by having a small blanket, rug, or a similar part, so that the animal can position itself thereon and avoid getting dirty when it has to remain for a while in a particular place where the floor is dirty, wet, consists of dirt, or presents any other inconvenience for the animal, as well as to prevent the animal from dirtying the surface of said floor, for example a rug in a commercial establishment, etc.

### FIELD OF APPLICATION OF THE INVENTION

The field of application of the present invention falls within the sector of the industry dedicated to the manufacture of pet accessories, focusing particularly on the field of leashes.

### BACKGROUND OF THE INVENTION

As is known, when owners of pets, such as dogs and cats, stay for a while in a particular place, for example a restaurant or shop, etc., the animal usually sits or stretches out on the floor. On many occasions, this can be a problem, since the floor may be dirty, wet, consist of dirt, etc., and the animal will get dirty as a result. The opposite case can also occur, that is, the floor has a type of delicate material, for example carpet or rugs, and it is the pet that may stain it.

To prevent this, there are blankets or rugs on the market that are placed on the floor so that the pet can position itself thereon, often being a pleasant element for the animal that makes it feel more comfortable for being its own.

The problem is that normally the blanket has to be carried separately and it often happens that it is forgotten and no thought has been given to bringing it when its use becomes necessary. Therefore, it would be desirable to be able to prevent said forgetfulness by means of including the blanket in the leash that is necessarily used being attached to the pet whenever it leaves the house.

Furthermore, and as a reference to the current state of the art, it should be noted that at least the applicant is unaware of the existence of any other leash for pets with incorporated blanket, or any other invention with similar application, which presents technical and structural features that are the same or similar to those presented by that which is claimed herein.

### DESCRIPTION OF THE INVENTION

The leash for pets with incorporated blanket proposed by the invention is configured as the ideal solution to the aforementioned objective, the characterising details that make it possible and that distinguish it being conveniently included in the final claims that accompany this description.

Specifically, as set forth above, the invention proposes a leash to be attached to a pet when taking said pet, usually dogs or cats, for a walk, said leash being distinguished by having a small blanket, rug, or a similar part (hereinafter blanket), particularly provided so that the animal can position itself thereon and avoid getting dirty when it has to remain for a while in a particular place where the floor is dirty, wet, consists of dirt, or presents any other inconvenience for the animal, as well as to prevent the animal from dirtying the surface of said floor, for example a rug in a commercial establishment, etc., and obviously also so that it can be used whenever desired.

To that end, the leash preferably has means for carrying the blanket folded-up and fastened to a point of the leash and for allowing the blanket to be spread out where necessary, said blanket being fastened either in a fixed manner or in a removable manner, in which case it becomes an optional use element, which may or may not be incorporated to the leash, and furthermore the possibility of being able to wash the blanket is facilitated.

in one embodiment, the blanket is incorporated wound around a segment of the leash, preferably a segment particularly provided to allow said winding and to ensure that the blanket does not become unwound while it is not in use, for example by means of elastic fastening elements.

Furthermore, in another embodiment, the blanket is incorporated inside a pocket provided to that end in the leash, which, depending on the material from which the blanket is made, can be elongated in order to incorporate the wound-up blanket or rectangular like a pouch in order to incorporate the folded-up blanket and which in turn can also be attached to the leash in a fixed or removable manner.

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represents the following:
Figure 1 shows a perspective view of a first embodiment of the leash for pets with incorporated blanket object of the invention, specifically an example in which the blanket is wound around a segment of the leash;
Figure 2 shows a perspective view of the example of the leash of the invention shown in Figure 1, in this case depicted with the blanket in a spread-out position;
Figure 3 shows a perspective view of the leash of the invention according to the example shown in the preceding figures, in this case depicted with the blanket separated from the leash;
Figure 4 shows a perspective view of another example of the leash of the invention, in this case with a pocket for the blanket, in an example of the pocket having an elongated shape and fixed to the leash; and
Figure 5 shows a perspective view of another example of the leash in the variant thereof with a pocket for the blanket, in this case a pocket which is independent of the leash and can be removed.

### PREFERRED EMBODIMENT OF THE INVENTION

In view of the aforementioned figures, and in accordance with the adopted numbering, one may observe therein several non-limiting exemplary embodiments of the leash for pets with incorporated blanket of the invention, comprising what is described in detail below.

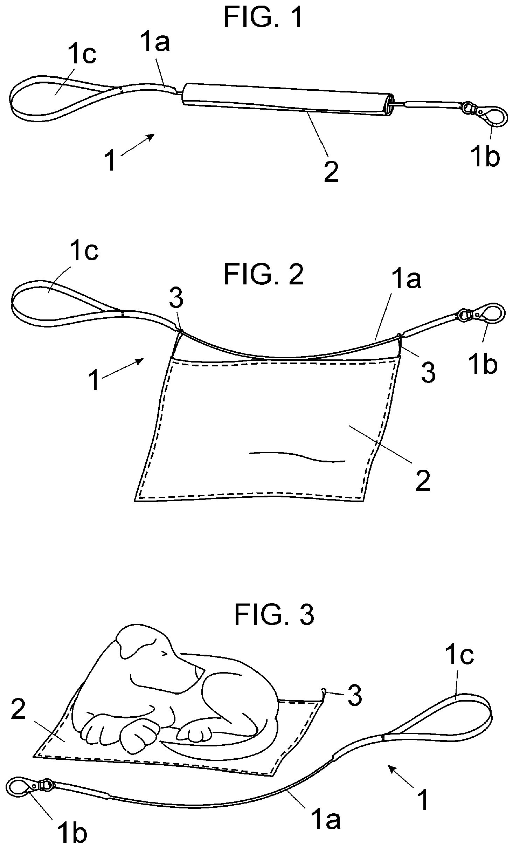

in that sense, as can be seen in said figures, the leash (1) of the invention formed, as is known, by at least one filiform body (1a) with a fixing element (1b) for fixing to the pet collar at one end and holding means (1c) at the opposite end for the handling thereof, is distinguished by further comprising a blanket (2) incorporated with coupling means (3, 4) such that they allow carrying said blanket (2) in a folded-up position without affecting the normal use of the leash (1) and, when desired, allow deploying the blanket so that the pet can position itself thereon, as shown in Figure 3.

in one embodiment, such as the one shown in Figures 1 and 2, the coupling means for coupling the blanket (2) to the leash (1) are formed by fastening elements (3), preferably elastic fastening elements, for incorporating the wound-up blanket (2) in a segment of the filiform body (1a) of the leash (1), preferably a narrower circular segment, particularly provided to that end, which furthermore allows ensuring that the blanket does not become unwound while not in use.

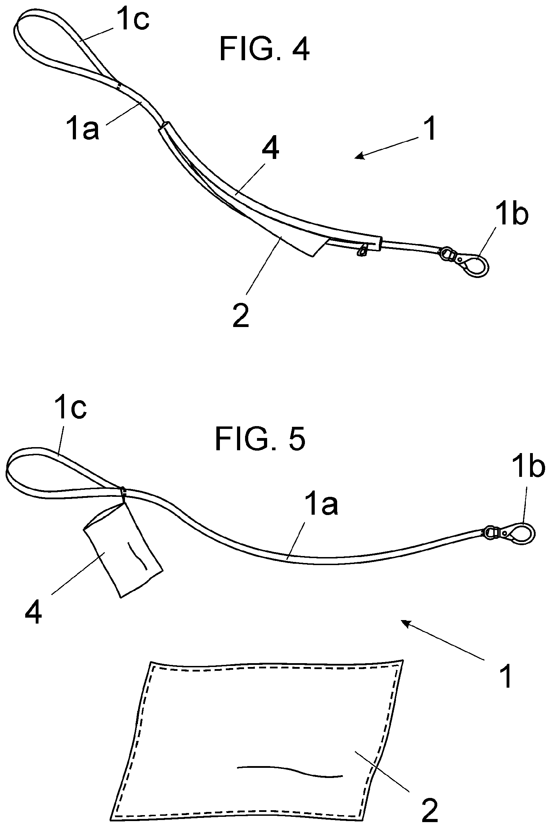

Furthermore, in another embodiment, such as the one shown in Figures 4 and 5, the coupling means for coupling the blanket (2) to the leash (1) are formed by a pocket (4) provided to that end in the leash (1).

in an embodiment option, such as the one shown in Figure 4, said pocket (4) has an elongated configuration and is attached to the filiform body (1a) of the leash (1) like a cover, allowing the wound-up blanket (2) to be housed therein.

Furthermore, in another embodiment option, shown in Figure 5, the pocket (4) has a rectangular pouch-like configuration and is attached to a point of the leash (1) close to the end which has holding means (1c) for handling same.

in any case, the coupling means, both in the case of consisting of fastening elements (3) and in the case of consisting of a pocket (4), can be attached to the leash in a fixed manner or in a removable manner. Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A leash for pets with incorporated blanket formed by at least one filiform body (1a) with a fixing element (1b) for fixing to the pet collar at one end and holding means (1c) at the opposite end for the handling thereof, **characterised by** further comprising a blanket (2) incorporated with coupling means (3, 4) such that they allow carrying said blanket (2) in a folded-up position without affecting the normal use of the leash (1) and, when desired, allow deploying the blanket so that the pet can position itself thereon.

2. The leash for pets with incorporated blanket according to claim 1, **characterised in that** the coupling means for coupling the blanket (2) to the leash (1) are formed by fastening elements (3) for incorporating the wound-up blanket (2) in a segment of the filiform body (1a) of the leash (1) particularly provided to that end, which furthermore allows ensuring that the blanket does not become unwound while not in use.

3. The leash for pets with incorporated blanket according to claim 2, **characterised in that** the fastening elements (3) forming the coupling means for coupling the blanket (2) to the leash (1) are elastic fastening elements.

4. The leash for pets with incorporated blanket according to claim 1, **characterised in that** the coupling means for coupling the blanket (2) to the leash (1) are formed by a pocket (4) provided to that end in the leash (1).

5. The leash for pets with incorporated blanket according to claim 4, **characterised in that** the pocket (4) has an elongated configuration and is attached to the filiform body (1a) of the leash (1) like a cover, allowing the wound-up blanket (2) to be housed therein.

6. The leash for pets with incorporated blanket according to claim 4, **characterised in that** the pocket (4) has a rectangular pouch-like configuration, and is attached to a point of the leash (1).

7. The leash for pets with incorporated blanket according to any of the preceding claims, **characterised in that** the coupling means (3, 4) are attached to the leash in a fixed manner.

8. The leash for pets with incorporated blanket according to any of the preceding claims, **characterised in that** the coupling means (3, 4) are attached to the leash in a removable manner.
